# EUROPÄISCHE PATENTSCHRIFT

(11) **EP 4 139 638 B1**
(45) Veröffentlichungstag und Bekanntmachung des Hinweises auf die Patenterteilung: **28.10.2026**
(21) Anmeldenummer: 21719093.3
(22) Anmeldetag: 13.04.2021
(51) Int. Cl.: G01F 23/00, B65B 3/26, B67C 3/00

(54) **VERFAHREN UND VORRICHTUNG ZUR FÜLLHÖHENKONTROLLE VON BEHÄLTERN**
PROCESS AND DEVICE FOR CHECKING THE FILLING LEVEL OF CONTAINERS
PROCÉDÉ ET DISPOSITIF DE CONTRÔLE DU NIVEAU DE REMPLISSAGE DE RÉCIPIENTS

(30) Priorität: 24.04.2020 DE 102020111254
(43) Veröffentlichungstag der Anmeldung: 01.03.2023
(73) Patentinhaber: Krones AG, 93073 Neutraubling (DE)
(72) Erfinder: PIANA, Stefan, 93073 Neutraubling (DE); WILL, Christof, 93073 Neutraubling (DE); MENGELKAMP, Judith, 93073 Neutraubling (DE); NIEDERMEIER, Anton, 93073 Neutraubling (DE)
(74) Vertreter: Grünecker Patent- und Rechtsanwälte PartG mbB
(86) Internationale Anmeldenummer: PCT/EP2021/059475
(87) Internationale Veröffentlichungsnummer: WO 2021/213832

(56) Entgegenhaltungen:
- WO-A2-2006/051078
- DE-A1- 102013 207 139
- US-A- 5 864 600
- US-A1- 2007 107 801
- ROMEDI SIMON JOHANN ET AL: "Neuronale Netze: Grundlagen und einfaches Anwendungsbeispiel Seminararbeit für das wissenschaftlich-propädeutische Seminar "Angewandte Informatik"", 5 November 2018 (2018-11-05), XP055820560, Retrieved from the Internet <URL:https://www.hans-riegel-fachpreise.com/fileadmin/hans-riegel-fachpreise/Module/ausgezeichnete-arbeiten/hans-riegel-fachpreise-seminararbeit-vwa-2019-cyrani.pdf> [retrieved on 20210702]

## Beschreibung

Die Erfindung betrifft ein Verfahren und eine Vorrichtung zur Füllhöhenkontrolle von Behältern mit den Merkmalen des Oberbegriffs von Anspruch 1 bzw. 10.

Es sind Verfahren und Vorrichtungen zur Füllhöhenkontrolle von Behältern bekannt, bei denen die Behälter mit einem Transporteur als Behältermassenstrom transportiert und mit einer Sensoreinheit als Messdaten erfasst werden. Die Messdaten werden dann mit einer Auswerteeinheit ausgewertet und dabei von den Behältern jeweils die Füllhöhe ermittelt. Insbesondere wird zur Ermittlung der Füllhöhe ein Flüssigkeitsspiegel in den Behältern bestimmt, der eine flüssige oder pastöse Phase eines Füllguts von einem darüber angeordneten Gas abgrenzt.

Die US5864600A offenbart ein Container-Inspektionssystem zur Inspektion eines sich bewegenden Containers, welches eine Strahlungsquelle umfasst, die so positioniert ist, dass sie Strahlung auf den sich bewegenden Container richtet. Ein Strahlungsdetektor ist so positioniert, dass er einen Teil der Strahlung von der Strahlungsquelle empfängt, der nicht vom sich bewegenden Behälter absorbiert oder blockiert wird, und als Reaktion darauf elektrische Signale erzeugt. Die Verarbeitungsschaltung erzeugt auf der Grundlage der vom Strahlungsdetektor erzeugten elektrischen Signale mehrdimensionale Bilddaten für den sich bewegenden Behälter und vergleicht mindestens einen ersten Teil der mehrdimensionalen Bilddaten mit einem entsprechenden Teil der mehrdimensionalen Bilddaten für einen Standardcontainer. Anschließend bestimmt die Verarbeitungsschaltung auf der Grundlage eines Ergebnisses des Vergleichs eine oder mehrere Eigenschaften des Behälters aus dem Satz von Eigenschaften, einschließlich des Füllstands des Behälters, ob der Behälter unterfüllt ist, ob der Behälter überfüllt ist, ob der Behälter ob der Behälter ordnungsgemäß unter Druck steht und ob er dicht ist.

Die DE 102018133602 A1 offenbart eine Kontrollvorrichtung zum Bestimmen eines Füllstands eines mit einer Flüssigkeit zu befüllenden Behälters mit einer Sendeeinheit zum emittieren wenigstens eines den Behälter durchdringenden Messstrahls und eine dieser zugeordneten, den Messstrahl empfangenden Empfangseinheit. In einem gewünschten Füllzustand wird der Messstrahl an einer Grenzfläche zwischen der Flüssigkeit und einer darüber angeordneten Gasschicht in eine von der Empfangseinheit abgelenkte Richtung reflektiert.

Die DE 102005009176 A1 offenbart ein Verfahren und eine Vorrichtung zur Füllstandsmessung an Behältern, wobei die Behälter in einer Transportrichtung durch eine Messstation hindurch bewegt werden, die eine spaltenartige Sendeeinrichtung für Messstrahlen und eine hierzu parallele spaltenartige Empfangseinrichtung für Messstrahlen aufweist.

Die WO 03/016886 A1 offenbart ein Verfahren und eine Vorrichtung zur Inspektion gefüllter und verschlossener Flaschen mit einer Kamera, die wenigstens den Kopf- und Schulterbereich der Flaschen von der Seite durch eine telezentrische Optik aus wenigstens zwei umfänglich verschiedenen Richtungen von einer Lichtquelle betrachtet und wenigstens zwei Abbildungen erzeugt, die einer Bildanalyse und/oder einem Bildvergleich unterzogen werden, wobei bei Erkennung einer unzulässigen Abweichung ein Signal erzeugt wird.

Nachteilig bei den bekannten Verfahren und Vorrichtungen ist, dass sie in Abhängigkeit vom Behältertyp und/oder dem Füllgut von einem erfahrenen Anwender mittels Parameter angepasst werden müssen. Zudem kann es in seltenen Fällen vorkommen, beispielsweise bei der Bildung von dichtem Schaum, dass der Füllspiegel des Füllguts nicht zuverlässig ermittelt werden kann, um die Füllhöhe zu bestimmen. Darüber hinaus können auch Schwankungen in der Behälterwandung, z.B. Verdickungen, Farbschlieren oder Glasfehler, oder auch die Behälterform selbst eine verzerrte Darstellung des Flüssigkeitsspiegels bewirken, welche eine konventionelle algorithmische Auswertung der Füllhöhe erschweren oder gar verhindern können.

Aufgabe der vorliegenden Erfindung ist es daher, ein Verfahren und eine Vorrichtung zur Füllhöhenkontrolle von Behältern bereitzustellen, das mit weniger Aufwand auf verschiedene Behältertypen und/oder Sorten eingerichtet und mit dem die Füllhöhe zuverlässiger und kostensparend ermittelt werden kann.

Zur Lösung dieser Aufgabenstellung stellt die Erfindung ein Verfahren zur Füllhöhenkontrolle von Behältern mit den Merkmalen des Anspruchs 1 bereit. Vorteilhafte Ausführungsformen der Erfindung sind in den Unteransprüchen genannt.

Dadurch, dass die Messdaten von der Auswerteeinheit mit dem auf Basis künstlicher Intelligenz arbeitenden Auswerteverfahren ausgewertet werden, um die Füllhöhe zu ermitteln, kann das Auswerteverfahren gleichermaßen auf verschiedene Behältertypen und/oder Sorten eingerichtet werden, ohne dass es beim Wechsel einer erneuten Parametrisierung bedarf. Folglich muss das auf Basis künstlicher Intelligenz arbeitende Auswerteverfahren nicht mehr von einem erfahrenen Anwender aufwendig parametrisiert und optimiert werden, um es konkret auf einen Behältertyp und/oder eine Sorte einzustellen. Zudem können Fehleinstellungen verringert werden, wodurch das Verfahren zuverlässiger und damit kostensparender arbeitet.

Das Verfahren zur Füllhöhenkontrolle kann in einer Getränkeverarbeitungsanlage eingesetzt werden. Insbesondere kann es einem Füllverfahren zum Füllen der Behälter mit dem Füllgut und/oder einem Verschlussverfahren zum Verschließen der Behälter mit einem Verschluss nach- oder zugeordnet sein.

Die Behälter können dazu vorgesehen sein, das Füllgut, wie beispielsweise ein Getränk, ein Nahrungsmittel, ein Hygieneartikel, eine Paste, ein chemisches, biologisches und/oder pharmazeutisches Produkt aufzunehmen. Die Behälter können als Flaschen, insbesondere als Kunststoffflaschen oder Glasflaschen ausgebildet sein. Bei Kunststoffflaschen kann es sich im speziellen um PET-, PEN-, HD-PE oder PP-Flaschen handeln. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais hergestellt werden. Die Behälter können vor der Füllhöhenkontrolle mit einem Verschluss versehen werden, beispielsweise mit einem Kronkorken, Schraubverschluss, Abreißverschluss oder dergleichen. Denkbar ist auch, dass die Behälter bei der Füllhöhenkontrolle ohne Verschluss erfasst werden.

Bei einem Behältertyp kann es sich um eine bestimmte Behälterform handeln. Bei einer Sorte kann es sich um einen bestimmten Typ von Füllgut handeln, beispielsweise um Bier im Unterschied zu einem Softdrink.

Denkbar ist, dass das Verfahren dazu eingesetzt wird, einen Flüssigkeitsspiegel in den Behältern zu bestimmen, der eine flüssige oder pastöse Phase des Füllguts von einem darüber angeordneten Gas abgrenzt. Beispielsweise kann es sich bei dem Flüssigkeitsspiegel jeweils in den Behältern um eine Grenze zwischen einem Getränk und einem darüber angeordneten Gas handeln. Denkbar ist auch, dass es sich bei dem Flüssigkeitsspiegel um eine Grenze zwischen der flüssigen oder pastösen Phase des Füllguts und einem darüber angeordneten Schaum handelt.

Die Behälter können mit dem Transporteur zu der Sensoreinheit als der Behältermassenstrom transportiert werden, vorzugsweise als einbahniger Behältermassenstrom. Denkbar ist jedoch auch einen mehrbahniger Behältermassenstrom. Der Transporteur kann ein Karussell und/oder einen Lineartransporteur umfassen. Beispielsweise kann der Transporteur ein Förderband umfassen, auf dem die Behälter stehend in einen Kontrollbereich der Sensoreinheit transportiert werden. Denkbar sind auch Aufnahmeelemente, die ein oder mehrere Behälter während des Transports aufnehmen.

Die Sensoreinheit kann als optische Sensoreinheit ausgebildet sein, insbesondere mit einem Sender und mit einem Empfänger für elektromagnetische Strahlung, um die Behälter in einem Bereich eines Soll-Flüssigkeitsspiegels mittels elektromagnetischer Strahlung zu durchleuchten und/oder zu beleuchten und/oder mit dem Sensor zu erfassen. Bei der elektromagnetischen Strahlung kann es sich um Licht, insbesondere um infrarotes oder sichtbares Licht handeln. Beispielsweise können die Behälter so mit Durchlicht und/oder mit Auflicht durch- bzw. beleuchtet werden. Denkbar ist auch, dass es sich dabei um Röntgenstrahlen handelt, mit denen die Behälter durchleuchtet werden. Der Sender kann ein oder mehrere Quellen zur Erzeugung der elektromagnetischen Strahlung umfassen, beispielsweise eine LED, einen Laser und/oder eine Röntgenquelle. Der Empfänger kann ein oder mehrere Detektoren für elektromagnetische Strahlung umfassen, beispielsweise eine oder mehrere Fotodioden, Fototransistoren und/oder einen fotosensitiven Zeilen- oder Matrixsensor, wie beispielsweise einen CCD- oder CMOS-Chip. Zudem kann die Sensoreinheit ein oder mehrere Umlenkelemente für die elektromagnetische Strahlung umfassen, beispielsweise Linsen und/oder Spiegel.

Die Auswerteeinheit kann die Messdaten mit einem Signalprozessor und/oder mit einer CPU (Central Processing Unit) und/oder GPU (Graphics Processing Unit) und/oder mit einer TPU (Tensor Processing Unit) und/oder mit einer VPU (Vision Processing Unit) verarbeiten. Denkbar ist auch, dass die Auswerteeinheit eine Speichereinheit, eine oder mehrere Datenschnittstellen, beispielsweise eine Netzwerkschnittstelle, eine Anzeigeeinheit und/oder eine Eingabeeinheit umfasst. Vorzugsweise kann die Auswerteeinheit die Messdaten digital verarbeiten, um von den Behältern jeweils die Füllhöhe zu ermitteln.

Bei den Messdaten kann es sich um Ausgabesignale der Sensoreinheit handeln. Die Messdaten können als digitales oder analoges Datensignal vorliegen. Beispielsweise können die Messdaten als zeit- und/oder ortsaufgelöste, digitale Datensignale vorliegen.

Die Füllhöhe kann einer relativen Höhe des Flüssigkeitsspiegels gegenüber einer Referenzhöhe am Behälter entsprechen. Bei der Referenzhöhe kann sich beispielsweise um eine Dichtfläche an der Behältermündung oder um eine untere Aufstandsfläche am Behälterboden handeln. Denkbar ist auch, dass es sich bei der Referenzhöhe um eine Füllhöhenmarkierung handelt.

Das auf Basis künstlicher Intelligenz arbeitende Auswerteverfahren kann wenigstens einen Verfahrensschritt mit einem tiefen neuronalen Netzwerk umfassen, wobei die Messdaten zur Ermittlung der Füllhöhe mit dem tiefen neuronalen Netzwerk ausgewertet werden. Dadurch kann die Verarbeitung der Messdaten der verschiedenen Behältertypen und/oder Sorten abstrahiert werden und ist so besonders effizient. Zudem kann das tiefe neuronale Netzwerk ohne Anpassung von Parametern auf die verschiedenen Behältertypen und/oder Sorten trainiert werden. Das tiefe neuronale Netzwerk kann eine Eingabeschicht, mehrere verdeckte Schichten und eine Ausgabeschicht umfassen. Das tiefe neuronale Netzwerk kann ein sogenanntes faltendes neuronales Netzwerk mit wenigstens einer faltenden Schicht und mit einer Poolingschicht umfassen. Denkbar ist jedoch auch, dass das auf Basis künstlicher Intelligenz arbeitende Auswerteverfahren wenigstens einen Verfahrensschritt mit einem neuronalen Netzwerk umfasst, wobei die Messdaten zur Ermittlung der Füllhöhe mit dem neuronalen Netzwerk ausgewertet werden.

Die Sensoreinheit kann eine Kamera umfassen, mit der die Behälter als Bilddaten erfasst werden, wobei die Messdaten die Bilddaten umfassen. Dadurch ist es mit einfachen Mitteln möglich, besonders umfangreiche Messdaten der Behälter zur Ermittlung der Füllhöhe zu erfassen. Dadurch können beispielsweise auch komplexere Flüssigkeitsspiegel besser erkannt werden, beispielsweise wenn Schaum über dem Füllgut vorhanden ist, wenn der Füllspiegel aufgrund Schwappens nicht eben und horizontal ist oder eine Unterscheidung notwendig wird ob der Behälter randvoll oder nicht befüllt ist. Diese Unterscheidung leer/ voll kann bei klaren, farblosen Behältern oftmals nur über die beobachtete Änderung des Brechungsindex und damit einhergehende Abdunklung im Konturbereich des Behälters möglich sein. Die Kamera kann den Zeilen- oder Matrixsensor und ein Objektiv umfassen, um die Behälter bildhaft zu erfassen. Vorzugsweise kann der Zeilen- oder Matrixsensor infrarote Lichtstrahlung erfassen. Denkbar ist, dass die Behälter bei der Erfassung zwischen dem Sender und dem Empfänger für Lichtstrahlung angeordnet werden, wobei der Empfänger die Kamera umfasst. Der Sender kann als Beleuchtungseinheit ausgebildet sein und eine oder mehrere LEDs als Lichtquellen umfassen, insbesondere infrarote und/ oder sichtbare LEDs. Bei den Bilddaten kann es sich beispielsweise um Kamerabilder handeln, beispielsweise um TIFF-oder JPEG-Dateien.

Die Sensoreinheit umfasst unterschiedliche Sensoren, die jeweils mit einem anderen Messverfahren arbeiten, wobei die Behälter mit den unterschiedlichen Sensoren als die Messdaten erfasst werden. Dadurch, dass die Behälter mit den unterschiedlichen Messverfahren erfasst werden, ist die Ermittlung der Füllhöhe besonders zuverlässig. Die unterschiedlichen Sensoren können die Kamera, eine Lichtschranke, insbesondere eine Laserlichtschranke, mehrere über einander angeordnete Lichtschranken, mehrere übereinander angeordnete Photodioden und dergleichen umfassen. Denkbar ist auch, dass bei einem der unterschiedlichen Sensoren mit einem Sender ein Messstrahl emittiert wird, der die Behälter durchdringt und der in einem gewünschten Füllzustand an dem Flüssigkeitsspiegel von einem Empfänger weg oder zu ihm hin abgelenkt wird. Denkbar sind auch Sensoren zur Füllhöhenerfassung mittels Hochfrequenz oder Röntgenstrahlung.

Das auf Basis der künstlichen Intelligenz arbeitende Auswerteverfahren kann mit Trainingsdatensätzen trainiert werden, die jeweils Messdaten eines Trainingsbehälters und optional eine zugeordnete Zusatzinformation umfassen. Dadurch kann das Auswerteverfahren auf die verschiedenen Behältertypen und/oder Sorten besonders einfach überwacht trainiert werden. Bei den Trainingsmessdaten kann es sich um die gleiche Art Daten handeln, wie die Messdaten, insbesondere um Bilddaten. Die zugeordnete Zusatzinformation kann in den Trainingsdatensätzen jeweils als Metadaten eingebettet sein. Beispielsweise kann es sich bei den Trainingsdatensätzen jeweils um erfasste Messdaten eines Trainingsbehälters als Trainingsmessdaten und die Füllhöhe als zugeordnete Zusatzinformation handeln. Bei einem Trainingsbehälter kann es sich um einen zuvor näher beschriebenen Behälter handeln. Der Trainingsbehälter kann mit einem Füllgut befüllt und insbesondere mit einem Verschluss verschlossen sein. Denkbar ist, dass die Trainingsdatensätze Trainingsmessdaten von unterschiedlichen Behältertypen und/oder Sorten von Trainingsbehältern bzw. Füllgut umfassen. Die Trainingsdaten können bevorzugt Grenzfälle beinhalten wie z.B. stark schwappender Füllstand, Produktropfen über der Füllhöhe, Gasbläschen im Produkt, leere oder komplett gefüllte Behälter, leere jedoch mit Entlastungsnebel beaufschlagte Behälter und/oder solche mit diffuser Flüssigkeits- Schaumgrenze. Dadurch kann das auf Basis künstlicher Intelligenz arbeitende Auswerteverfahren auf besonders viele verschiedene Behältertypen und/oder

Sorten trainiert werden und muss bei der Auswertung der Messdaten der Behälter nicht mehr speziell angepasst werden.

Die Trainingsmessdaten können von einem Anwender wenigstens teilweise ausgewertet werden, wobei dabei die Zusatzinformation manuell ermittelt wird. Dadurch können die Trainingsmessdaten besonders zuverlässig ausgewertet worden.

Denkbar ist auch, dass die Trainingsmessdaten zusätzlich oder alternativ mit einer weiteren Auswerteeinheit mit einem konventionell arbeitenden Auswerteverfahren wenigstens teilweise ausgewertet und dabei die Zusatzinformation automatisch ermittelt wird. Dadurch können besonders viele Trainingsdatensätze verschiedener Behältertypen und/oder Sorten automatisch erstellt werden. Mit dem "konventionell arbeitenden Auswerteverfahren" kann hier ein Auswerteverfahren gemeint sein, das nicht auf künstliche Intelligenz basiert. Insbesondere kann das konventionell arbeitende Auswerteverfahren keinen Verfahrensschritt mit einem neuronalen oder tiefen neuronalen Netzwerk aufweisen. Denkbar ist auch, dass dies bedeutet, dass das konventionell arbeitende Auswerteverfahren die Messdaten und/oder Bilddaten mit einer Transformations-, Punkt-, Nachbarschafts-, Filter-, Histogramm-, Schwellwert-, Helligkeits- und/oder Kontrastoperation auswertet, um damit mittelbar in den Messdaten den Flüssigkeitsspiegel zu ermitteln.

Die Trainingsbehälter können mit einer weiteren Sensoreinheit als die Trainingsmessdaten erfasst werden. Dadurch können die Trainingsbehälter beispielsweise in einer Versuchsanlage des Herstellers der Getränkeverarbeitungsanlage erfasst und daraus die Trainingsdatensätze erstellt werden. Denkbar ist jedoch auch, dass die Trainingsbehälter mit derselben Sensoreinheit erfasst werden, mit der auch die Behälter des Behältermassenstroms als Messdaten erfasst werden.

Die Zusatzinformation kann eine Füllhöhe, einen vollständig überfüllten Zustand und/oder einen vollständig unterfüllten Zustand des in den Trainingsmessdaten erfassten Trainingsbehälters, eine Sorteninformation und/oder eine Auswertbarkeitsinformation zu den Trainingsmessdaten umfassen. Dadurch kann der Füllzustand der Trainingsbehälter besonders genau charakterisiert werden. Bei dem vollständig überfüllten Zustand und/oder dem vollständig unterfüllten Zustand kann die Füllhöhe außerhalb eines Meßbereichs liegen. Bei der Auswertbarkeitsinformation kann es sich um eine Fehlerinformation handeln, ob eine Auswertung der entsprechenden Trainingsmessdaten durch den Anwender oder das konventionell arbeitende Auswerteverfahren möglich war. Denkbar ist beispielsweise, dass der Flüssigkeitsspiegel bei einem bestimmten Trainingsbehälter nicht klar erkennbar ist und damit die entsprechenden Trainingsmessdaten nicht ausgewertet werden konnten.

Es können die Trainingsbehälter mit jeweils unterschiedlichen Behältertypen und/oder Sorten als die Trainingsmessdaten erfasst werden, um daraus die Trainingsdatensätze zu bilden. Dadurch können besonders viele verschiedene Behälterformen und/oder Füllgutsorten zum Training des auf Basis künstlicher Intelligenz arbeitenden Auswerteverfahren herangezogen werden. Folglich können dann besonders viele verschiedene Behältertypen und/oder Sorten der Füllhöhenkontrolle unterzogen werden, ohne das auf Basis künstlicher Intelligenz arbeitende Auswerteverfahren weiter anzupassen.

Darüber hinaus stellt die Erfindung zur Lösung der Aufgabenstellung eine Vorrichtung zur Füllhöhenkontrolle von Behältern mit den Merkmalen des Anspruchs 10 bereit. Vorteilhafte Ausführungsformen der Erfindung sind in den Unteransprüchen genannt.

Dadurch, dass die Auswerteeinheit dazu ausgebildet ist, die Messdaten mit dem auf Basis künstlicher Intelligenz arbeitenden Auswerteverfahren auszuwerten, um die Füllhöhe zu ermitteln, kann die Auswerteeinheit gleichermaßen für verschiedene Behältertypen und/oder Sorten eingerichtet werden, ohne dass es beim Wechsel einer erneuten Parametrisierung bedarf. Folglich muss das auf Basis künstlicher Intelligenz arbeitende Auswerteverfahren nicht mehr von einem erfahrenen Anwender aufwendig parametrisiert und optimiert werden, um es konkret auf einen Behältertyp und/oder eine Sorte einzustellen. Zudem können Fehleinstellungen verringert werden, wodurch das Verfahren zuverlässiger und damit kostensparender arbeitet.

Die Vorrichtung ist zur Durchführung des Verfahrens nach einem der Ansprüche 1-9 ausgebildet.

Die Vorrichtung kann in einer Getränkeverarbeitungsanlage angeordnet sein. Insbesondere kann die Vorrichtung einem Füller und/oder einem Verschließer nach- oder zugeordnet sein, um die Füllhöhe des abgefüllten Füllguts zu kontrollieren.

Das auf Basis künstlicher Intelligenz arbeitende Auswerteverfahren kann ein tiefes neuronales Netzwerk umfassen, um die Messdaten zur Ermittlung der Füllhöhe mit dem tiefen neuronalen Netzwerk auszuwerten. Dadurch kann die Verarbeitung der Messdaten der verschiedenen Behältertypen und/oder Sorten abstrahiert werden und ist so besonders effizient. Zudem kann das tiefe neuronale Netzwerk besonders einfach auf die verschiedenen Behältertypen und/oder Sorten trainiert werden. Das tiefe neuronale Netzwerk kann eine Eingabeschicht, mehrere verdeckte Schichten und eine Ausgabeschicht umfassen. Das tiefe neuronale Netzwerk kann ein sogenanntes faltendes neuronales Netzwerk mit wenigstens einer faltenden Schicht und mit einer Poolingschicht umfassen. Denkbar ist jedoch auch, dass das auf Basis künstlicher Intelligenz arbeitende Auswerteverfahren wenigstens einen Verfahrensschritt mit einem neuronalen Netzwerk umfasst, wobei die Messdaten zur Ermittlung der Füllhöhe mit dem neuronalen Netzwerk ausgewertet werden.

Die Sensoreinheit kann eine Kamera umfassen, um die Behälter als Bilddaten zu erfassen, wobei die Messdaten die Bilddaten umfassen. Dadurch ist es mit einfachen Mitteln möglich, besonders umfangreiche Messdaten der Behälter zur Ermittlung der Füllhöhe zu erfassen. Dadurch können beispielsweise auch komplexere Flüssigkeitsspiegel besser erkannt werden, beispielsweise wenn Schaum über dem Füllgut vorhanden ist. Die Kamera kann den Zeilen- oder Matrixsensor und ein Objektiv umfassen, um die Behälter bildhaft zu erfassen. Vorzugsweise kann der Zeilen- oder Matrixsensor infrarote Lichtstrahlung erfassen. Denkbar ist, dass die Behälter bei der Erfassung zwischen dem Sender und dem Empfänger für Lichtstrahlung angeordnet sind, wobei der Empfänger die Kamera umfasst. Der Sender kann als Beleuchtungseinheit ausgebildet sein und eine oder mehrere LEDs als Lichtquellen umfassen, insbesondere infrarote LEDs. Bei den Bilddaten kann es sich beispielsweise um Kamerabilder handeln, beispielsweise um TIFF-oder JPEG-Dateien.

Die Sensoreinheit umfasst unterschiedliche Sensoren, die jeweils mit einem anderen Messverfahren ausgebildet sind, um die Behälter als die Messdaten zu erfassen. Dadurch werden die Behälter mit den unterschiedlichen Messverfahren erfasst und die Ermittlung der Füllhöhe ist so besonders zuverlässig. Die unterschiedlichen Sensoren können die Kamera, eine Lichtschranke, insbesondere eine Laserlichtschranke, mehrere übereinander angeordnete Lichtschranken, mehrere übereinander angeordnete LEDs und dergleichen umfassen. Denkbar ist auch, dass einer der unterschiedlichen Sensoren dazu ausgebildet ist, mit einem Sender ein Messstrahl zu emittieren, der die Behälter durchdringt und der in einem gewünschten Füllzustand an dem Flüssigkeitsspiegel von einem Empfänger weg oder zu ihm hin abgelenkt wird. Denkbar ist zudem, dass einer der unterschiedlichen Sensoren dazu ausgebildet ist, die Füllhöhe mittels Hochfrequenz oder Röntgenstrahlung zu erfassen.

Die Vorrichtung kann ein Computersystem mit der Auswerteeinheit umfassen. Dadurch kann die Auswerteeinheit als Computerprogrammprodukt implementiert sein. Das Computersystem kann den Signalprozessor und/oder die CPU (Central Processing Unit) und/oder die GPU (Graphics Processing Unit) und/oder die TPU (Tensor Processing Unit) und/oder die VPU (Vision Processing Unit) umfassen. Denkbar ist auch, dass das Computersystem eine Speichereinheit, eine oder mehrere Datenschnittstellen, eine Netzwerkschnittstelle, eine Anzeigeeinheit und/oder eine Eingabeeinheit umfasst. Denkbar ist, dass die Auswerteeinheit und die Sensoreinheit als integriertes

System ausgebildet sind. Beispielsweise kann das Computersystem in die Kamera integriert sein bzw. die Kamera kann als "intelligente" Kamera ausgebildet sein.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel einer Vorrichtung zur Füllhöhenkontrolle von Behältern in einer Draufsicht;
- Figur 2: ein Beispiel für bei der Füllhöhenkontrolle erfasste Messdaten; und
- Figuren 3A - 3B: ein erfindungsgemäßes Ausführungsbeispiel eines Verfahrens zur Füllhöhenkontrolle von Behältern als Flussdiagramm.

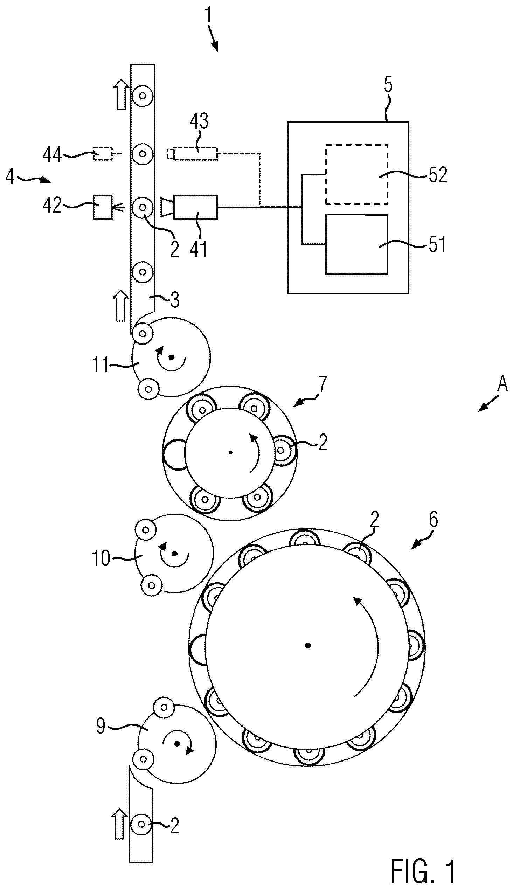

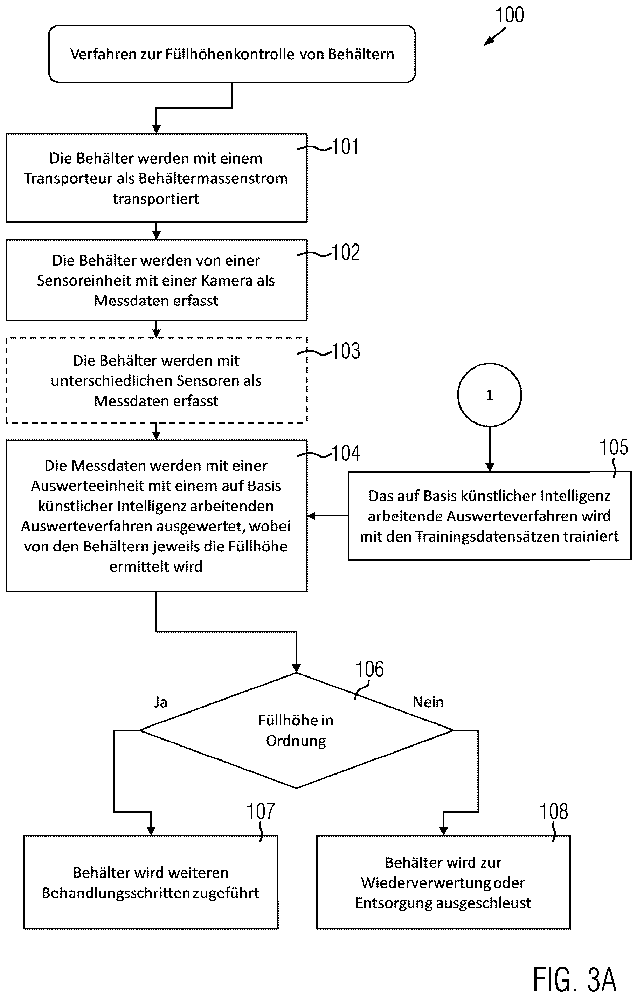

In der Figur 1 ist ein erfindungsgemäßes Ausführungsbeispiel einer Vorrichtung 1 zur Füllhöhenkontrolle von Behältern 2 in einer Draufsicht dargestellt. Die Vorrichtung 1 ist zur Durchführung des Verfahrens 100 in den nachfolgend beschriebenen Figuren 3A - 3B ausgebildet.

Zu sehen ist, dass die Behälter 2 zunächst mit dem Einlaufstern 9 an den Füller 6 übergeben und dort mit einem Füllgut, beispielsweise mit einem Getränk befüllt werden. Der Füller 6 umfasst beispielsweise ein Karussell mit daran angeordneten Füllorganen (hier nicht dargestellt), mit denen die Behälter 2 während des Transports mit dem Füllgut befüllt werden. Nachfolgend werden die Behälter 2 über den Zwischenstern 10 an den Verschließer 7 übergeben und dort mit einem Verschluss versehen, beispielsweise mit einem Korken, Kronkorken oder mit einem Schraubverschluss. Dadurch wird das Füllgut in den Behältern 2 vor Umgebungseinflüssen geschützt und kann nicht mehr aus den Behältern 2 auslaufen.

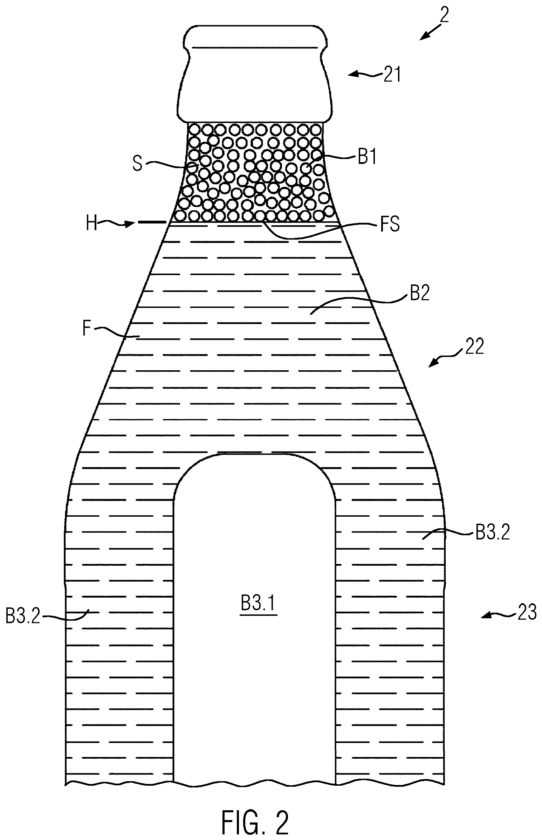

Nachfolgend werden die Behälter 2 über den Auslaufstern 11 an den Transporteur 3 übergeben, der die Behälter 2 als Behältermassenstrom zur Sensoreinheit 4 transportiert. Der Transporteur ist hier beispielhaft als Förderband ausgebildet, auf dem die Behälter 2 stehend transportiert werden. Die daran angeordnete Sensoreinheit 4 umfasst einen ersten Sensor mit der Beleuchtungseinrichtung 42 als Sender und der Kamera 41 als Empfänger, um die Behälter 2 mit elektromagnetischer Lichtstrahlung im Durchlicht zu erfassen. Beispielsweise handelt es sich um infrarotes Licht. Die Beleuchtungseinrichtung 42 weist beispielsweise eine streuende Lichtaustrittsscheibe auf, die mit mehreren LEDs hinterleuchtet wird und die so einen leuchtenden Bildhintergrund für die Behälter 2 aus Sicht der Kamera 41 bildet. Mit der Kamera 41 werden die Behälter 2 dann als Messdaten erfasst und als digitale Signale an das Computersystem 5 weitergeleitet. Ein Beispiel für derartige Messdaten der Kamera 41 wird weiter unten anhand der Figur 2 näher erläutert.

Zusätzlich ist es denkbar, dass die Behälter 2 optional mit einem zweiten Sensor 43, 44 erfasst werden, der mit einem anderen Messverfahren als der erste Sensor 41, 42 arbeitet. Beispielsweise kann es sich um eine Röntgenquelle 44 als Sender und einen Röntgenempfänger 43 als Empfänger handeln. Durchläuft der Röntgenstrahl das Füllgut, so wird er anders gedämpft, als beim Durchlaufen der Luft oder des Schaums oberhalb des Flüssigkeitsspiegels. Folglich können die Behälter 2 mit verschiedenen Messverfahren erfasst werden, so dass bei der nachfolgenden Auswertung die Füllhöhe noch zuverlässiger für verschiedene Behältertypen und/oder Sorten ermittelt werden kann.

Des Weiteren ist das Computersystem 5 mit den Auswerteeinheiten 51, 52 zu sehen. Das Computersystem 5 umfasst beispielsweise eine CPU, eine Speichereinheit, eine Eingabe- und Ausgabeeinheit und eine Netzwerkschnittstelle. Dementsprechend sind die Auswerteeinheiten 51, 52 als Computerprogrammprodukt in dem Computersystem 5 implementiert.

Die Auswerteeinheit 51 ist dazu ausgebildet, die Messdaten der Behälter 2 mit einem auf Basis künstlicher Intelligenz arbeitenden Auswerteverfahren auszuwerten, um die Füllhöhe zu ermitteln. Dies wird nachfolgend anhand der Figuren 3A - 3B näher beschrieben.

Die weitere Auswerteeinheit 52 ist lediglich optional vorhanden und dient zur Auswertung von Trainingsmessdaten, die von Trainingsbehältern (hier nicht dargestellt) mit der Sensoreinheit 4 erfasst werden. Die weitere Auswerteeinheit 52 ist dazu ausgebildet, die Trainingsmessdaten der Trainingsbehälter mit einem konventionell arbeitenden Auswerteverfahren auszuwerten und dabei eine dem jeweiligen Trainingsbehälter zugeordnete Zusatzinformation automatisch zu ermitteln. Bei der Zusatzinformation handelt es sich um eine Füllhöhe, einen vollständig überfüllten Zustand und/oder einen vollständig unterfüllten Zustand des in den Trainingsmessdaten erfassten Trainingsbehälters und/oder um eine Auswertbarkeitsinformation zu den Trainingsmessdaten. Folglich können mit der weiteren Auswerteeinheit 52 auf konventioneller Basis automatisch eine Vielzahl von Trainingsdatensätzen bereitgestellt werden, um damit anschließend das auf Basis künstlicher Intelligenz arbeitende Auswerteverfahren der Auswerteeinheit 51 zu trainieren. Dies wird weiter unten anhand der Figuren 3A - 3B näher erläutert.

Die Behälter 2 mit der gewünschten Füllhöhe werden nach der Füllhöhenkontrolle weiteren Verarbeitungsschritten zugeführt, beispielsweise einer Etikettiermaschine und/oder einem Palettierer. Demgegenüber werden Behälter 2 mit abweichender Füllhöhe mittels einer Weiche aus dem Behältermassenstrom zur Wiederverwertung oder Entsorgung ausgeschleust.

In der Figur 2 ist ein Beispiel für bei der Füllhöhenkontrolle erfasste Messdaten der Kamera 41 dargestellt. In diesem Fall handelt es sich um Bilddaten, in denen der Behälter 2 in einer seitlichen Ansicht mit dem Behälterkörper 23, der Behälterschulter 22 und der Behältermündung 21 abgebildet ist. Zu sehen ist, dass der Behälter 2 weiterhin mit dem Füllgut F befüllt ist, über dem sich zur Behältermündung 21 hin der Schaum S gebildet hat.

Weiterhin ist zu sehen, dass der Bereich B2 nahe der Behälterschulter 22 und die Bereiche B3.2 am Rand des Behälterkörpers 23 in den Messdaten dunkel abgebildet sind. Dagegen erscheint der mittlere Bereich B3.1 des Behälterkörpers 23 hell. Dies liegt darin begründet, dass die elektromagnetischer Lichtstrahlung beim Durchlaufen des Behälters 2 durch sein transparentes Material (beispielsweise Glas oder PET) und das Füllgut F gebrochen wird, sodass nur im mittleren Bereich B3.1 des Behälterkörpers 23 ein direkter Lichtweg von der Beleuchtungseinrichtung 42 zur Kamera 41 hin freigegeben wird.

Des Weiteren ist zu sehen, dass auch der Bereich B2 im Bereich der Behälterschulter 22 aufgrund der noch stärkeren Lichtbrechung keinen oder nur einen geringen direkten Lichtweg zulässt. Folglich ist dieser Bereich B2, je nach Sorte mehr oder weniger stark von Streulicht durchdrungen. Zudem wird der Schaum S zur Kamera in 41 hin ebenfalls nur von Streulicht durchdrungen, da sich die elektromagnetische Lichtstrahlung mehrfach an den Blasen den Schaums S bricht.

Folglich ist also der Flüssigkeitsspiegel FS in den Messdaten der Figur 2 nicht einfach durch einen Helligkeitssprung identifizierbar. Konventionelle Bildverarbeitungsalgorithmen müssten hier erst aufwändig durch eine geeignete Parametrisierung an den Behältertyp und die Sorte des Füllguts F angepasst werden. Hier setzt die Erfindung an, um die Füllhöhe H zu ermitteln.

In den Figuren 3A - 3B ist ein erfindungsgemäßes Ausführungsbeispiel eines Verfahrens 100 zur Füllhöhenkontrolle von Behältern 2 als Flussdiagramm dargestellt. Das Verfahren 100 wird lediglich beispielhaft anhand der zuvor in Bezug auf die Figur 1 beschriebenen Vorrichtung 1 beschrieben.

Zunächst werden die Behälter 2 im Schritt 101 mit dem Transporteur 3 als Behältermassenstrom transportiert. Dies geschieht beispielsweise mittels eines Förderbands oder eines Karussells. Dabei werden die Behälter 2 zur Sensoreinheit 4 transportiert.

Im nachfolgenden Schritt 102 werden die Behälter 2 von der Sensoreinheit 4 als Messdaten erfasst. Beispielsweise werden die Behälter 2 von einem Sensor mit der Beleuchtungseinheit 42 und mit der Kamera 41 durchleuchtet und so als Bilddaten erfasst.

Optional werden die Behälter 2 im Schritt 103 zusätzlich mit einem dazu unterschiedlichen Sensor erfasst. Beispielsweise durchläuft ein Röntgenstrahl aus der Röntgenquelle 44 die Behälter 2 und wird mit dem Röntgenempfänger 43 erfasst. Dadurch, dass die Behälter 2 mit den unterschiedlichen Messverfahren der Sensoren 41, 42 bzw. 43, 44 erfasst werden, ist die Ermittlung der Füllhöhe H besonders zuverlässig.

Anschließend werden im Schritt 104 die Messdaten mit der Auswerteeinheit 51 mit einem auf Basis künstlicher Intelligenz arbeitenden Auswerteverfahren ausgewertet, wobei von den Behältern 2 jeweils die Füllhöhe H ermittelt wird. Dazu umfasst das Auswerteverfahren wenigstens ein Verfahrensschritt mit einem tiefen neuronalen Netzwerk, beispielsweise ein faltendes neuronales Netzwerk. Dabei durchlaufen die Messdaten zunächst eine Eingabeschicht, mehrere Faltungsschichten und/oder versteckte Schichten, eine Poolingschicht und eine Ausgabeschicht. Mit der Ausgabeschicht wird beispielsweise direkt die Füllhöhe H ausgegeben. Denkbar ist auch, dass zusätzlich ein vollständig überfüllter Zustand, ein vollständig unterfüllter Zustand des in den Messdaten erfassten Behälters und/oder eine Auswertbarkeitsinformation zu den Messdaten ausgegeben wird.

Ist die so ermittelte Füllhöhe H gemäß nachfolgendem Schritt 106 in Ordnung, so werden die Behälter 2 im Schritt 107 weiteren Behandlungsschritten zugeführt. Andernfalls werden die Behälter im Schritt 108 zur Wiederverwertung oder Entsorgung ausgeschleust.

Um das auf Basis künstlicher Intelligenz arbeitende Auswerteverfahren des Schritts 104 einzulernen, wird es vorab mit einer Vielzahl von Trainingsdatensätzen trainiert (Schritt 105). Die Trainingsdatensätze umfassen jeweils Trainingsmessdaten eines Trainingsbehälters und eine zugeordnete Zusatzinformation. Die Zusatzinformation beschreibt beispielsweise die Füllhöhe, einen vollständig überfüllten Zustand, einen vollständig unterfüllten Zustand des in den Trainingsmessdaten erfassten Trainingsbehälters und/oder eine Auswertbarkeitsinformation zu den Trainingsmessdaten. Folglich sind zum Training des tiefen neuronalen Netzwerks sowohl Daten der Eingabeschicht in Form der Trainingsmessdaten als auch der Ausgabeschicht in Form der zugeordneten Zusatzinformation bekannt und das tiefe neuronale Netzwerk kann entsprechend auf verschiedene Behältertypen und/oder Sorten trainiert werden. Folglich muss der Anwender die Auswertung nicht mehr aufwändig auf die verschiedenen Behältertypen und/oder Sorten parametrisieren.

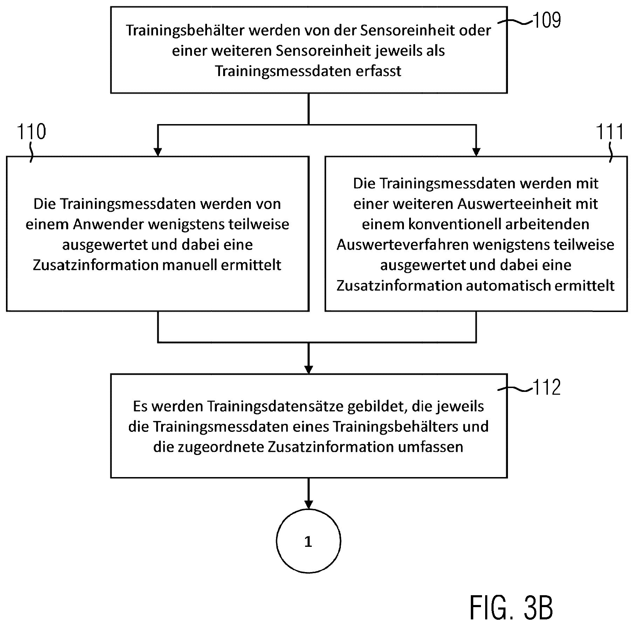

Wie in der Figur 3B zu sehen ist, werden die Trainingsbehälter zur Erstellung der Trainingsdatensätze mit der Sensoreinheit 4 oder mit einer weiteren, hier nicht dargestellten Sensoreinheit als die Trainingsmessdaten erfasst (Schritt 109).

Danach können die Trainingsmessdaten im Schritt 110 von einem Anwender wenigstens teilweise ausgewertet werden, um die Zusatzinformation manuell zu ermitteln. Beispielsweise kann der Anwender in den Bilddaten, wie in der Figur 2 gezeigt, die Füllhöhe H manuell kennzeichnen.

Alternativ oder zusätzlich werden die Trainingsmessdaten mit der weiteren Auswerteeinheit 52 mit einem konventionell arbeitenden Auswerteverfahren wenigstens teilweise ausgewertet und dabei die Zusatzinformation automatisch ermittelt. Dadurch können besonders viele Trainingsdatensätze bereitgestellt werden. Dies eignet sich beispielsweise für bereits bekannte Behältertypen, bei denen das konventionell arbeitende Auswerteverfahren besonders gut und zuverlässig arbeitet.

Nachfolgend werden im Schritt 112 die Trainingsdatensätze gebildet, die jeweils die Trainingsmessdaten eines Trainingsbehälters und die zugeordnete Zusatzinformation umfassen. Die Trainingsdatensätze werden dann dem Schritt 105 übergeben und damit das auf Basis künstlicher Intelligenz arbeitende Auswerteverfahren trainiert.

Dadurch, dass die Messdaten von der Auswerteeinheit 51 mit dem auf Basis künstlicher Intelligenz arbeitenden Auswerteverfahren ausgewertet werden, um die Füllhöhe H zu ermitteln, kann das Auswerteverfahren gleichermaßen auf verschiedene Behältertypen und/oder Sorten eingerichtet werden, ohne dass es beim Wechsel einer erneuten Parametrisierung bedarf. Folglich muss das auf Basis künstlicher Intelligenz arbeitende Auswerteverfahren nicht mehr von einem erfahrenen Anwender aufwendig parametrisiert und optimiert werden, um es konkret auf einen Behältertyp und/oder eine Sorte einzustellen. Zudem können Fehleinstellungen verringert werden, wodurch das Verfahren 100 und die Vorrichtung 1 zuverlässiger und damit kostensparender arbeiten.

Es versteht sich, dass in den zuvor beschriebenen Ausführungsbeispielen genannte Merkmale nicht auf diese Merkmalskombinationen beschränkt sind, sondern auch einzelnen oder in beliebigen anderen Merkmalskombinationen möglich sind.

## Patentansprüche

1. Verfahren (100) zur Füllhöhenkontrolle von Behältern, wobei die Behälter mit einem Transporteur als Behältermassenstrom transportiert (101) und mit einer Sensoreinheit als Messdaten erfasst werden (102), und wobei die Messdaten mit einer Auswerteeinheit ausgewertet und dabei von den Behältern jeweils die Füllhöhe ermittelt wird, wobei die Messdaten von der Auswerteeinheit mit einem auf Basis künstlicher Intelligenz arbeitenden Auswerteverfahren ausgewertet werden, um die Füllhöhe zu ermitteln (104), **dadurch gekennzeichnet, dass** die Sensoreinheit unterschiedliche Sensoren umfasst, die jeweils mit einem anderen Messverfahren arbeiten, und wobei die Behälter mit den unterschiedlichen Sensoren als die Messdaten erfasst werden (103).

2. Verfahren (100) nach Anspruch 1, wobei das auf Basis künstlicher Intelligenz arbeitende Auswerteverfahren wenigstens einen Verfahrensschritt mit einem tiefen neuronalen Netzwerk umfasst, wobei die Messdaten zur Ermittlung der Füllhöhe mit dem tiefen neuronalen Netzwerk ausgewertet werden.

3. Verfahren (100) nach Anspruch 1 oder 2, wobei die Sensoreinheit eine Kamera umfasst, mit der die Behälter als Bilddaten erfasst werden, und wobei die Messdaten die Bilddaten umfassen.

4. Verfahren (100) nach einem der vorangegangenen Ansprüche, wobei das auf Basis künstlicher Intelligenz arbeitende Auswerteverfahren mit Trainingsdatensätzen trainiert wird (105), die jeweils Trainingsmessdaten eines Trainingsbehälters und optional eine zugeordnete Zusatzinformation umfassen.

5. Verfahren (100) nach Anspruch 4, wobei die Trainingsmessdaten von einem Anwender wenigstens teilweise ausgewertet werden, wobei dabei die Zusatzinformation manuell ermittelt wird (110).

6. Verfahren (100) nach einem der Ansprüche 4 oder 5, wobei die Trainingsmessdaten mit einer weiteren Auswerteeinheit mit einem konventionell arbeitenden Auswerteverfahren wenigstens teilweise ausgewertet und dabei die Zusatzinformation automatisch ermittelt wird (111).

7. Verfahren (100) nach einem der Ansprüche 4 - 6, wobei die Trainingsbehälter mit einer weiteren Sensoreinheit als die Trainingsmessdaten erfasst werden (109).

8. Verfahren (100) nach einem der Ansprüche 4 - 7, wobei die Zusatzinformation eine Füllhöhe, einen vollständig überfüllten Zustand und/oder einen vollständig unterfüllten Zustand des in den Trainingsmessdaten erfassten Trainingsbehälters und/oder eine Auswertbarkeitsinformation zu den Trainingsmessdaten umfasst.

9. Verfahren (100) nach einem der Ansprüche 4 - 8, wobei die Trainingsbehälter mit jeweils unterschiedlichen Behältertypen und/oder Sorten als die Trainingsmessdaten erfasst werden, um daraus die Trainingsdatensätze zu bilden.

10. Vorrichtung (1) zur Füllhöhenkontrolle von Behältern (2), ausgebildet zur Durchführung des Verfahrens (100) nach einem der Ansprüche 1 - 9, mit
einem Transporteur (3) zum Transport der Behälter (2) als Behältermassenstrom,
einer Sensoreinheit (4), um die Behälter als Messdaten zu erfassen, und
mit einer Auswerteeinheit (51), die dazu ausgebildet ist, die Messdaten auszuwerten und dabei von den Behältern (2) jeweils die Füllhöhe (H) zu ermitteln, wobei die Auswerteeinheit (51) dazu ausgebildet ist, die Messdaten mit einem auf Basis künstlicher Intelligenz arbeitenden Auswerteverfahren auszuwerten, um die Füllhöhe (H) zu ermitteln, **dadurch gekennzeichnet, dass** die Sensoreinheit (4) unterschiedliche Sensoren (41, 43) umfasst, die jeweils mit einem anderen Messverfahren ausgebildet sind, um die Behälter (2) als die Messdaten zu erfassen.

11. Vorrichtung (1) nach Anspruch 10, wobei das auf Basis künstlicher Intelligenz arbeitende Auswerteverfahren ein tiefes neuronales Netzwerk umfasst, um die Messdaten zur Ermittlung der Füllhöhe (H) mit dem tiefen neuronalen Netzwerk auszuwerten.

12. Vorrichtung (1) nach Anspruch 10 oder 11, wobei die Sensoreinheit (4) eine Kamera (41) umfasst, um die Behälter (2) als Bilddaten zu erfassen, und wobei die Messdaten die Bilddaten umfassen.

## Claims

1. A method (100) for fill level inspection of containers, wherein the containers are transported (101) as a mass flow of containers by a conveyor and are detected (102) as measurement data by a sensor unit, and wherein the measurement data are evaluated by an evaluation unit while determining the fill level from the respective containers, wherein the measurement data are evaluated by the evaluation unit using an evaluation method operating on the basis of artificial intelligence to determine the fill level (104), **characterized in that** the sensor unit comprises different sensors, respectively operating with a different measurement method, and wherein the containers are detected (103) as the measurement data by the different sensors.

2. The method (100) according to claim 1, wherein the evaluation method operating on the basis of artificial intelligence comprises at least one method step involving a deep neural network, wherein the measurement data for determining the filling level are evaluated using the deep neural network.

3. The method (100) according to claims 1 or 2, wherein the sensor unit comprises a camera for capturing the containers as image data, and wherein the measurement data comprise the image data.

4. The method (100) according to anyone of the preceding claims, wherein the evaluation method operating on the basis of artificial intelligence is trained (105) with training data sets each comprising training measurement data of a training container and optionally an associated element of additional information.

5. The method (100) according to claim 4, wherein the training measurement data are at least partially evaluated by a user, wherein the element of additional information is obtained manually (110).

6. The method (100) according to anyone of claims 4 or 5, wherein the training measurement data are at least partially evaluated by a further evaluation unit by means of a conventionally operating evaluation method while automatically obtaining (111) the element of additional information.

7. The method (100) according to anyone of claims 4 - 6, wherein the training containers are detected (109) as the training measurement data by a further sensor unit.

8. The method (100) according to any one of claims 4 - 7, wherein the element of additional information comprises a fill level, a completely overfilled state and/or a completely underfilled state of the training container detected in the training measurement data, and/or an element of evaluability information regarding the training measurement data.

9. The method (100) according to anyone of claims 4 - 8, wherein the training containers are detected as the training measurement data with respective different container types and/or varieties in order to form the training data sets therefrom.

10. An apparatus (1) for fill level inspection of containers (2), configured to carry out the method (100) according to one of claims 1 - 9, comprising
a conveyor (3) for transporting the containers (2) as a mass flow of containers,
a sensor unit (4) for detecting the containers as measurement data, and
an evaluation unit (51) configured to evaluate the measurement data while determining the respective fill level (H) from the containers (2), wherein the evaluation unit (51) is configured to evaluate the measurement data using an evaluation method operating on the basis of artificial intelligence to determine the fill level (H), **characterized in that** the sensor unit (4) comprises different sensors (41, 43), respectively configured with a different measuring method for detecting the containers (2) as the measurement data.

11. The apparatus (1) according to claim 10, wherein the evaluation method operating on the basis of artificial intelligence comprises a deep neural network, for evaluating the measurement data thereby determining the filling level (H) using the deep neural network.

12. The apparatus (1) according to claims 10 or 11, wherein the sensor unit (4) comprises a camera (41) for capturing the containers (2) as image data, and wherein the measurement data comprise the image data.

## Revendications

1. Procédé (100) permettant de vérifier le niveau de remplissage de récipients, dans lequel les récipients sont transportés (101) par un système de transport sous forme de flux massique de récipient et sont enregistrés (102) sous forme de données de mesure par une unité de détection, et dans lequel les données de mesure sont évaluées par une unité d'évaluation et le niveau de remplissage respectif des récipients est déterminé, dans lequel les données de mesure sont évaluées par l'unité d'évaluation selon un procédé d'évaluation utilisant l'intelligence artificielle afin de déterminer (104) le niveau de remplissage, **caractérisé en ce que** l'unité de détection comprend différents capteurs utilisant respectivement un procédé de mesure différent, et dans lequel les récipients sont enregistrés (103) par les différents capteurs sous forme de données de mesure.

2. Procédé (100) selon la revendication 1, dans lequel le procédé d'évaluation utilisant l'intelligence artificielle comprend au moins une étape de procédé faisant appel à un réseau de neurones profond, dans lequel les données de mesure sont évaluées grâce au réseau de neurones profond afin de déterminer le niveau de remplissage.

3. Procédé (100) selon la revendication 1 ou 2, dans lequel l'unité de détection comprend une caméra avec laquelle les récipients sont enregistré sous forme de données d'image, et dans lequel les données de mesure comprennent les données d'image.

4. Procédé (100) selon l'une quelconque des revendications précédentes, dans lequel le procédé d'évaluation utilisant l'intelligence artificielle est entraîné (105) avec des ensembles de données d'entraînement qui comprennent respectivement des données de mesure d'entraînement d'un récipient d'entraînement et facultativement des informations supplémentaires associées.

5. Procédé (100) selon la revendication 4, dans lequel les données de mesure d'entraînement sont évaluées au moins partiellement par un utilisateur, dans lequel les informations supplémentaires sont déterminées (110) manuellement.

6. Procédé (100) selon l'une quelconque des revendications 4 ou 5, dans lequel les données de mesure d'entraînement sont évaluées au moins partiellement par une autre unité d'évaluation selon un procédé d'évaluation fonctionnant de manière conventionnelle et les informations supplémentaires sont déterminées (111) automatiquement.

7. Procédé (100) selon l'une quelconque des revendications 4 à 6, dans lequel les récipients d'entraînement sont enregistrés (109) par une autre unité de détection sous la forme des données de mesure d'entraînement.

8. Procédé (100) selon l'une quelconque des revendications 4 à 7, dans lequel les informations supplémentaires comprennent un niveau de remplissage, un état de fort sur-remplissage et/ou un état de fort sous-remplissage du récipient d'entraînement enregistré dans les données de mesure d'entraînement, et/ou des informations d'évaluabilité par rapport aux données de mesure d'entraînement.

9. Procédé (100) selon l'une quelconque des revendications 4 à 8, dans lequel les récipients d'entraînement représentant respectivement différents types et/ou variétés de récipients sont enregistrés sous la forme des données de mesure d'entraînement afin de former les ensembles de données d'entraînement à partir desdites données de mesure d'entraînement.

10. Dispositif (1) permettant de vérifier le niveau de remplissage de récipients (2), en particulier permettant de mettre en œuvre le procédé (100) selon l'une quelconque des revendications 1 à 9, comprenant
un dispositif de transport (3) permettant de transporter les récipients (2) sous la forme d'un flux massique de récipients,
une première unité de détection (4), afin d'enregistrer les récipients sous la forme de données de mesure, et
comprenant une unité d'évaluation (51) qui est conçue pour évaluer les données de mesure et déterminer respectivement le niveau de remplissage (H) des récipients (2), dans lequel l'unité d'évaluation (51) est conçue pour évaluer les données de mesure selon un procédé d'évaluation utilisant l'intelligence artificielle afin de déterminer le niveau de remplissage (H), **caractérisé en ce que** l'unité de détection (4) comprend différents capteurs (41, 43) qui sont respectivement conçus pour enregistrer les récipients (2) sous forme de données de mesure selon un procédé de mesure différent.

11. Dispositif (1) selon la revendication 10, dans lequel le procédé d'évaluation utilisant l'intelligence artificielle comprend un réseau de neurones profond afin d'évaluer les données de mesure grâce au réseau de neurones profond en vue d'une détermination du niveau de remplissage (H).

12. Dispositif (1) selon la revendication 10 ou 11, dans lequel l'unité de détection (4) comprend une caméra (41) afin d'enregistrer les récipients (2) sous forme de données d'image, et dans lequel les données de mesure comprennent les données d'image.
